(19) Europäisches Patentamt
European Patent Office
Office européen des brevets

(11) **EP 4 793 235 A1**

(12) **EUROPEAN PATENT APPLICATION**

(43) Date of publication:
**19.08.2026 Bulletin 2026/34**

(21) Application number: **25157532.0**

(22) Date of filing: **12.02.2025**

(51) International Patent Classification (IPC):
***C01B 33/18*** $^{(2006.01)}$ ***C01B 33/113*** $^{(2006.01)}$

(52) Cooperative Patent Classification (CPC):
**C01B 33/182; C01B 33/113**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Ferroglobe Innovation, S.L.**
**28046 Madrid (ES)**

(72) Inventors:
- **Míguez Novoa, José Manuel**
  **28046 Madrid (ES)**
- **Varela Miranda, Gonzalo**
  **28046 Madrid (ES)**
- **Souto Serantes, Alejandro**
  **28046 Madrid (ES)**
- **Grzelczak, Marcin**
  **28046 Madrid (ES)**
- **Pérez Vázquez, Antonio**
  **28046 Madrid (ES)**

(74) Representative: **Mendigutía Gómez, Maria Manuela**
**Bird & Bird International LLP**
**Paseo de la Castellana 7, 7ª Planta**
**28046 Madrid (ES)**

(54) **METHOD FOR PRODUCING SILICON MONOXIDE**

(57) The invention relates to a method for producing silicon monoxide (SiOx) and an apparatus for producing silicon monoxide (SiOx).

EP 4 793 235 A1

## Description

The invention relates to a method for producing silicon monoxide (SiOx) and an apparatus for producing silicon monoxide (SiOx).

## BACKGROUND OF THE INVENTION

Current methods for producing silicon monoxide (SiOx) typically involve the reaction of solid silicon (Si) and solid silica ($SiO_2$), in the form of blended fine powders and heated in a vacuum furnace at 1300 °C, resulting in batch process, slow kinetics and low efficiency and productivity (see e.g. JP S63-103815A). Moreover, these powders must be pre-milled to few micrometer size on an energy intensive process and thoroughly mixed prior to be introduced in the sublimation furnace. The reason for this is to assure good contact and reaction kinetics. Other experimental approaches used molten silicon by adding silica and/or silicon-silica pellets on top (see e.g US 2021/0135222 A1). However, these methods face significant challenges, including the fact that crucibles, and other parts suffer substantial deterioration due to the presence of silicon metal, which is very reactive. All these methods lead to increased operational costs and frequent maintenance or replacement of components.

The study of the possible reactions within the Si-$SiO_2$ system concludes that under the same absolute pressure and temperature, the maximum pressure of SiO(g) is generated by direct reaction between Si and $SiO_2$. Equilibrium conditions can be calculated analytically by solving equilibrium equations or graphically by using volatility diagrams. Results of these studies show that the maximum partial pressures of SiO(g) in equilibrium with the condensed phases of Si and $SiO_2$ increase with the treatment temperature. The following table shows the equilibrium constants (Kp) and the calculated partial pressures of SiO(g) (in atm) in equilibrium with Si and $SiO_2$, in the temperature range 1200°C-1700°C (FactSage Thermochemical Software and Databases).

| | 1200 | 1300 | 1400 | 1500 | 1600 | 1700 |
|---|---|---|---|---|---|---|
| $K_p$ | $7.2 \cdot 10^{-8}$ | $2.5 \cdot 10^{-6}$ | $5.5 \cdot 10^{-4}$ | $7.2 \cdot 10^{-4}$ | $6.8 \cdot 10^{-3}$ | $5.2 \cdot 10^{-2}$ |
| $P_{SiO}$ | $2.7 \cdot 10^{-4}$ | $1.6 \cdot 10^{-3}$ | 0.02 | 0.03 | 0.08 | 0.23 |

These results show that the production of SiO(g) is a thermally activated process, whose efficiency increases with increasing temperature.

Additionally, based on these theoretical premises, many studies propose that the production of SiO be carried out from solid state reactions, at an approximate maximum temperature lower than 1350°C, and under absolute pressures of up to $10^{-3}$ atm in the chamber. The lower SiO partial pressures in this range of temperatures result in relatively low production capabilities.

When the treatments are carried out at higher temperatures, and especially above the melting point of silicon (1414°C), SiO partial pressures are considerably higher, resulting in higher production capacity. However, in the classic Si-$SiO_2$ mixture system, the fusion of raw materials can lead to phase separation due to differences in density, which limits production capacity. The direct and continuous addition of $SiO_2$ to a bed of molten silicon avoids these problems and allows higher production capacity. A drawback of this process design is the reactivity of the molten silicon, which causes significant crucible degradation and limits the system's capacity for continuous operation. This difficulty is more important when the process is carried out under low absolute pressures.

There is still the need to provide a method for producing silicon monoxide (SiOx) and an apparatus for producing silicon monoxide (SiOx), preferably with a higher efficacy, higher conversion rate and/or higher consumables durability.

## SUMMARY OF THE INVENTION

Before describing the present invention in detail below, it is to be understood that this invention is not limited to the particular methodology, protocols and reagents described herein as these may vary. It is also to be understood that the terminology used herein is for the purpose of describing particular embodiments only and is not intended to limit the scope of the present invention which will be determined only by the appended claims. Unless defined otherwise, all technical and scientific terms used herein have the same meanings as commonly understood by one of ordinary skill in the art.

In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

In the following definitions of some terms are provided. These terms will in each instance of its use in the

remainder of the specification have the respectively defined meaning and preferred meanings.

The term "slag" is a molten mixture comprising or essentially consisting of silicon dioxide ($SiO_2$) and at least one auxiliary agent. In the present disclosure the terms "slag" and "molten mixture" can be used interchangeably, if not stated otherwise.

The "auxiliary agents" of the slag and their proportions are selected based on two main criteria. First, their volatility must be minimal under operating conditions. This ensures that the slag composition remains stable for a long time, and SiOx contamination is avoided. Second, the auxiliary agents and their relative proportions are selected and adjusted to ensure that the slag is completely or mostly molten at the operating temperature. Additionally, the auxiliary agents should preferably be more stable than silicon dioxide, that is, it cannot be reduced by silicon metal.

The term "condenser" shall be understood as apparatus which converts gaseous silicon monoxide (SiOx) to liquid and/or solid, preferably solid, silicon monoxide (SiOx).

The term "silicon monoxide" produced by the process of the present invention shall be understood as pure silicon monoxide. By the process steps (a) to (e) silicon monoxide with a purity of more than 99.0% by weight, preferably more than 99.9% by weight can be obtained. However, if an additional process step such as a step for doping the silicon monoxide is preferably present, doped silicon monoxide is obtained by the process of the present invention.

The invention relates to a method for producing silicon monoxide (SiOx) comprising the following steps:

(a) melting a mixture of silicon dioxide ($SiO_2$) and at least one auxiliary agent at a temperature above the melting temperature of the mixture to form a molten mixture of the silicon dioxide ($SiO_2$) and the at least one auxiliary agent;
(b) adding silicon (Si) and silicon dioxide ($SiO_2$) to the molten mixture;
(c) reacting the silicon (Si) with the molten mixture, preferably with the silicon dioxide ($SiO_2$) comprised therein, at a pressure of less than 10,000 Pa (= 10000 Pa), preferably less than 5,000 Pa (= 5000 Pa) to form gaseous silicon monoxide (SiOx);
(d) condensing and/or solidifying the gaseous silicon monoxide (SiOx); and
(e) obtaining liquid and/or solid, preferably solid, silicon monoxide (SiOx)

wherein x = 0.8 to 1.2.

The invention also relates to an apparatus for producing silicon monoxide (SiOx), preferably according to claims 1 to 10, comprising the following:

(1) a feeder for feeding silicon dioxide ($SiO_2$), silicon (Si) and optionally for at least one additional raw material component;
(2) a heating system for heating the mixture of the silicon dioxide ($SiO_2$) and the at least one auxiliary agent to a temperature being above the melting temperature of the mixture;
(3) a crucible for reacting the silicon (Si) with the molten mixture, preferably with the silicon dioxide ($SiO_2$) comprised therein, to form gaseous silicon monoxide (SiOx);
(4) a vacuum generating device for reducing to and/or maintaining the pressure at less than 10,000 Pa, preferably less than 5,000 Pa; and
(5) a condenser for solidifying gaseous silicon monoxide (SiOx);

wherein x = 0.8 to 1.2.

## BRIEF DESCRIPTION OF THE DRAWINGS

Fig. 1 shows an apparatus for silicon monoxide production.
Fig. 2 illustrates the reaction scheme of the SiOx production.
Fig. 3 shows the X-ray diffraction (XRD) patterns of the SiOx embodiments (A: Example 3, B: Example 5).
Fig. 4 shows an alternative apparatus for silicon monoxide production including a second condenser to enable continuous condensing.

## DETAILED DESCRIPTION OF THE INVENTION

In the method for producing silicon monoxide (SiOx) a mixture of silicon dioxide ($SiO_2$) and at least one auxiliary agent is melted at a temperature above the melting temperature of the mixture to form a molten mixture of the silicon dioxide ($SiO_2$) and the at least one auxiliary agent. Silicon (Si) and silicon dioxide ($SiO_2$) are added to the molten mixture. The added silicon dioxide ($SiO_2$) is preferably melted, and preferably added to compensate the losses and maintain the

slag composition. The silicon dioxide ($SiO_2$) in the molten mixture reacts with the silicon (Si) at a pressure of less than 10,000 Pa, preferably less than 5,000 Pa to form gaseous silicon monoxide (SiOx). The gaseous silicon monoxide (SiOx) is condensed and/or solidified, preferably solidified. As a result, liquid and/or solid, preferably solid, silicon monoxide (SiOx) is obtained. The value x is from 0.8 to 1.2.

In step (c) silicon dioxide ($SiO_2$) reacts with the silicon (Si). Preferably, the silicon (Si) added reacts with the silicon dioxide ($SiO_2$) comprised in the molten mixture. The silicon (Si) added in step (b) and/or silicon dioxide ($SiO_2$) added in step (b) are preferably added in solid form. Before they react with each other in step (c) the solid silicon dioxide ($SiO_2$) and/or the solid silicon (Si) are preferably melted. Preferably, silicon dioxide ($SiO_2$) comprised in the molten mixture is reacted with solid and/or liquid silicon (Si). Preferably, silicon dioxide ($SiO_2$) and silicon (Si) are present in liquid form when reacted in step (c).

Preferably, the gaseous silicon monoxide (SiOx) is solidified by a condenser and a solid silicon monoxide (SiOx) is obtained.

In a preferred embodiment the silicon (Si) is added and reacts with the molten mixture. Silicon dioxide ($SiO_2$) is added simultaneously to compensate the decrease of $SiO_2$ content in the molten mixture.

In a preferred embodiment the silicon (Si) and the silicon dioxide ($SiO_2$) are added simultaneously, in the form of mixed powder, pellets or granulates, to the molten mixture of the silicon dioxide ($SiO_2$) and the at least one auxiliary agent. In this case the reaction can be between the solid silicon (Si) and solid silicon dioxide ($SiO_2$) and the solid silicon (Si) and the molten mixture.

X should be between 0.8 to 1.2, preferably between 0.9 to 1.1. If it is higher than 1.2 the irreversible capacity loss in the first cycle will be too high and it is lower than 0.8 the cyclability will be affected.

Preferably, the molten mixture comprises (a) silicon dioxide ($SiO_2$) in the amount of more than 50% by weight, preferably more than 70% by weight, and (b) at least one auxiliary agent in an amount of 10 to 50% by weight (based on the total weight of the molten mixture), wherein the total amount of all components in the molten mixture add up to 100%.

Preferably, the silicon (Si) and silicon dioxide ($SiO_2$) added in step (b) have a particle size distribution (d50) of 0.01 to 5.0 mm.

Preferably, the silicon is added in step (b) to react with the molten mixture. Preferably, that reaction takes place on the surface area of the molten mixture.

Preferably, the silicon (Si) and the Silicon dioxide ($SiO_2$) added in step (b) are added continuously. In this preferred embodiment the silicon (Si) and the silicon dioxide ($SiO_2$) added in step (b) are added in form of agglomerated particles and/or pellets. The agglomerated particles and/or pellets have preferably a particle size distribution of 1 to 30 mm.

The reason of this is that if the furnace works on continuous charging mode in vacuum, the silicon (Si) and/or the silicon dioxide ($SiO_2$) can be moved to the condenser in case they were added in powder form (preferably < 100$\mu$m).

Preferably, the method for producing silicon monoxide (SiOx) is performed continuously.

Preferably, the silicon dioxide is added in step (b) to the molten mixture to maintain the composition of the molten mixture.

Preferably, the mixture of silicon dioxide and at least one auxiliary agent is melted in step (a), then the addition of silicon and silicon dioxide is performed simultaneously in step (b) and while or after the addition of silicon that it reacts with molten mixture in step (d).

Preferably, not only the reaction step (c) but also the addition step (b) is performed at a pressure of less than 10,000 Pa, preferably less than 5,000 Pa.

The method of the present invention uses a silica-based slag with auxiliary agents which preferably lower the melting point of the silicon dioxide. This innovative approach creates more favorable conditions for the reactor consumables, reducing wear and tear and thereby lowering costs. The higher viscosity of the molten mixture and its stability makes the process easier to operate than with molten silicon.

Additionally, the method of the present invention allows the reaction system to operate in a liquid state, enhancing production capacity and efficiency.

Furthermore, the charge of granulated raw material eliminates the costly process of micronization and blending of raw materials.

The composition of the molten mixture or slag is preferably maintained constant during the process.

The composition of the molten mixture or the slag has two main functions. Firstly, it must have a high resistivity, so that it acts as an electric resistance and therefore supply the necessary heat to the process. Secondly, the slag must act as a physical support for the reactants involved in the production of SiO(g).

In a preferred embodiment the at least one auxiliary agent is selected from the group consisting of aluminium oxide (preferably aluminium trioxide, $Al_2O_3$), zirconium oxide ($ZrO_2$), boron oxide (preferably boron trioxide, $B_2O_3$), titanium oxide (preferably titanium dioxide$TiO_2$), iron oxide (preferably iron(II) oxide, FeO), rare-earth oxides (yttrium oxide $Y_2O_3$, cerium oxide $CeO_2$, hafnium oxide $HfO_2$, among others rare earth oxides), alkaline earth oxides (strontium oxide SrO, calcium oxide CaO, magnesium oxide MgO, barium oxide BaO, beryllium oxide BeO) and others.

Preferably, in some embodiments the slag can also be used as a reagent. In these cases, the slag must be

composed mainly of $SiO_2$, which will react with the silicon added in step (b) to produce SiO(g). It can also contain at least one doping element, which is an additional raw material component, which are elements that improve the electrochemical performance of SiOx. The at least one doping element can be added to the molten mixture, preferably continuously. The doping elements can be volatilized by reacting with silicon and/or direct sublimation (in case of adding metals).

The molten mixture can preferably comprise at least one doping element which is preferably present in the form of oxide, silicate, nitride or other form, and can include the following elements: Mg, Li, Ca, Na, Al, K, B, P, Be among others, preferably Mg, Li, Ca, Na, and/or Al. In this process, additional silicon is introduced to facilitate the reduction of the dopant element. Furthermore, it is necessary to supplement the doping element in the form of an oxide, silicate, nitride, or other compound to compensate for its decreasing concentration in the molten mixture.

Alternatively, and when the doping element is not comprised in the molten mixture, the doping agent can be introduced during the continuous charging process as a metal in the desired amount. Upon melting and/or evaporation, the metal will combine with SiOx in the condenser. Preferably, the components of the slag must be carefully chosen so that the resulting physical properties allow the reagents to remain and react on its surface, thus guaranteeing its heating to high temperatures and simultaneously its permanent exposure to the high vacuum of the furnace chamber. Furthermore, it is important that all slag components have minimal volatility under SiO(g) production conditions, to ensure their stability and operation for long periods of time and to minimize SiOx contamination during the condensation stage.

Preferably, the slag must be a liquid state (i.e., in molten form) in the entire operation temperature range.

In general, the slag is preferably be made up of silicates, due to their chemical compatibility with the components of the reactive mixture, although any other composition that meets the basic requirements described herein is not ruled out.

In a preferred embodiment the invention relates to a method, wherein the at least one auxiliary agent, which are preferably very low volatility oxides or silicates, is selected from the group consisting of aluminium oxide (preferably aluminium trioxide, $Al_2O_3$), zirconium oxide ($ZrO_2$), boron oxide (preferably boron trioxide, $B_2O_3$), titanium oxide (preferably titanium dioxide$TiO_2$), iron oxide (preferably iron(II) oxide, FeO), rare-earth oxides (yttrium oxide $Y_2O_3$, cerium oxide $CeO_2$, hafnium oxide $HfO_2$, among others rare earth oxides), alkaline earth oxides (strontium oxide SrO, calcium oxide CaO, magnesium oxide MgO, barium oxide BaO, beryllium oxide BeO) and others. To lower the melting temperature of the silicon dioxide (1700°C) which is a fundamental component of silicates, at least one auxiliary agent is present in the molten mixture or slag.

Examples of oxides that meet these requirements are $Al_2O_3$, $ZrO_2$, $B_2O_3$, $TiO_2$, FeO, $Y_2O_3$, $CeO_2$, $HfO_2$, SrO, CaO, MgO, BaO, BeO among others, preferably CaO and $Al_2O_3$. The mixtures can be binary, in which case they are composed of $SiO_2$ and a single auxiliary agent. The mixtures can also contain more than one auxiliary agent. The proportions of the auxiliary agent are determined from the melting temperatures shown in the phase diagrams.

Preferably, all slag components are chemically compatible with the reagents and their volatility is minimal. Chemical compatibility ensures the stability of the slag and prevents the formation of compounds with intermediate oxidation states, which can be gaseous or highly volatile and could easily contaminate the SiOx during condensation. Regarding the volatility of said slag components, the individual behavior of each one is determined from their volatility diagrams. The selected slag components are preferably oxides with minimum vapor pressures that do not generate volatile compounds with intermediate oxidation states in atmospheres of low partial pressure of $O_2$.

In a preferred embodiment the invention relates to a method, wherein in step (b) the silicon dioxide ($SiO_2$) and the silicon (Si) are added in a molar ratio of 0.8 to 1.2, preferably approx. 1:1 ($SiO_2$ : Si).

In a preferred embodiment the invention relates to a method, wherein the mixture of the silicon dioxide ($SiO_2$) and the at least one auxiliary agent has a higher density than silicon (Si).

The components and their ratios to each other (i.e. their proportions) must be selected preferably so that the density of the slag is higher than the density of liquid silicon and the slag. Considering that the density of liquid silicon is 2.55g/cm$^3$, and that the density of fused $SiO_2$ is lower to that value, the density of the slag is preferably greater than 2.55g/cm$^3$.

In a preferred embodiment the invention relates to a method, wherein the reaction of step (d) takes place at a temperature of 1200°C to 1800°C, preferably 1400°C to 1700°C.

In a preferred embodiment the invention relates to a method, wherein the melting temperature of the mixture of the silicon dioxide ($SiO_2$) and the at least one auxiliary agent is 1200°C to 1800°C, preferably 1400°C to 1700°C.

In a preferred embodiment the invention relates to a method, which is performed in an electric furnace.

The method of the present invention permits the use of highly resistive slag heating by supplying an electric current through an electrode and dissipating the same in the form of heat as it passes through. The electrode, ideally composed of copper and cooled with water, passes through an electrically insulating sleeve into the reaction chamber. A graphite cylinder is located at the lower end of electrode. The carbon lining functions as the hearth electrode, with a current lead embedded within it. This lead is properly insulated to prevent contact with the steel shell.

In a preferred embodiment the invention relates to a method, wherein the electric furnace comprises (i) a conductive crucible containing the mixture of the silicon dioxide ($SiO_2$) and the at least one auxiliary agent and (ii) a heating system comprising a first electrode and a second electrode, wherein the first electrode is in contact with the mixture and the

second electrode is connected to the conductive crucible.

In a preferred embodiment the invention relates to a method, wherein the conductive crucible is made of carbon and/or silicon carbide.

In a preferred embodiment the invention relates to a method, wherein the furnace further comprises a refractory lining and a cooling system.

In a preferred embodiment the invention relates to a method, wherein the refractory lining and/or the cooling system is made of a material with high thermal conductivity.

In a preferred embodiment the invention relates to a method, wherein the material with high thermal conductivity is selected from the group consisting of carbon and silicon carbide.

In a preferred embodiment the invention relates to a method, wherein the refractory lining is cooled to and/or maintained at a temperature below the melting temperature of the mixture of the silicon dioxide ($SiO_2$) and the at least one auxiliary agent, preferably to form and/or maintain a protective layer of the mixture on the refractory lining.

In a preferred embodiment the invention relates to a method which is performed in the apparatus for producing silicon monoxide (SiOx) according to the present invention and/or preferred embodiments/aspects/features thereof.

The apparatus for producing silicon monoxide (SiOx), preferably by a method according to the present invention or a preferred embodiment thereof, comprises a feeder for feeding silicon dioxide ($SiO_2$), silicon (Si) and optionally for at least one additional raw material component. The apparatus comprises a heating system for heating the mixture of the silicon dioxide ($SiO_2$) and the at least one auxiliary agent to a temperature being above the melting temperature of the mixture. A crucible for reacting the silicon dioxide ($SiO_2$) with the silicon (Si) to form gaseous silicon monoxide SiO(g) is present. A vacuum generating device for reducing to and/or maintaining the pressure of less than 10,000 Pa, preferably less than 5,000 Pa is comprised. A condenser and/or solidifier for condensing and/or solidifying gaseous silicon monoxide (SiOx).

The present invention relates to a method and apparatus for synthesizing silicon monoxide (SiOx) through the reaction of silicon with a silica base slag ($SiO_2$) in an electric arc furnace. This process requires a temperature above the melting point of the slag and operates under a vacuum pressure of less than 10,000 Pa, preferably less than 5,000 Pa.

In a preferred embodiment, the apparatus includes an electric arc furnace equipped with a resistive slag heating system.

Electrical current is preferably injected through a central electrode and collected via another electrode connected to the conductive crucible of the furnace, made of carbon blocks or silicon carbide. This configuration allows for efficient heating of the molten mixture, promoting the desired chemical reactions.

Alternative options for the heating system are resistance furnaces and induction furnaces. Both are well-proven and widely used industrial technologies and provide the energy needed for the process in a very constant and homogeneous way, so they should be considered as valid alternatives to a central electrode in the present invention. However, the high intensity slag resistance furnace is preferable because it heats up the molten mixture more homogenously and it can more easily scale-up without limitations. In all cases, the use of crucibles is necessary to contain the slag and the reagent mixture. The crucibles are made of materials that are chemically compatible with the slag and raw materials, so that they can be used for a long time without degradation and contamination of the final product. Materials that meet these criteria for use as crucibles are graphite, vitreous silica, silicon carbide, silicon nitride or alumina.

In a preferred embodiment the invention relates to an apparatus, wherein the heating system comprising a first electrode and a second electrode, wherein the first electrode is in contact with the mixture and the second electrode is connected to the conductive crucible.

In a preferred embodiment the invention relates to an apparatus, which comprises a refractory lining and a cooling system.

In a preferred embodiment the invention relates to an apparatus, wherein the refractory lining and/or the cooling system is made of a material with high thermal conductivity.

In a preferred embodiment the invention relates to an apparatus, wherein the material with high thermal conductivity is selected from the group consisting of carbon and silicon carbide.

In a preferred embodiment the invention relates to an apparatus, wherein the refractory lining can be cooled to and/or maintained at a temperature below the melting temperature of the mixture, preferably to form and/or maintain a protective layer of the mixture on the refractory lining.

In a preferred embodiment the invention relates to an apparatus, which comprises a conduit between the reactor and the condenser, wherein the conduit is heated to prevent blockage caused by the deposition of SiO in the conduit during continuous use.

Preferably, a second condenser could be set to enable continuous condensation.

## DETAILED DESCRIPTION OF THE FIGURES

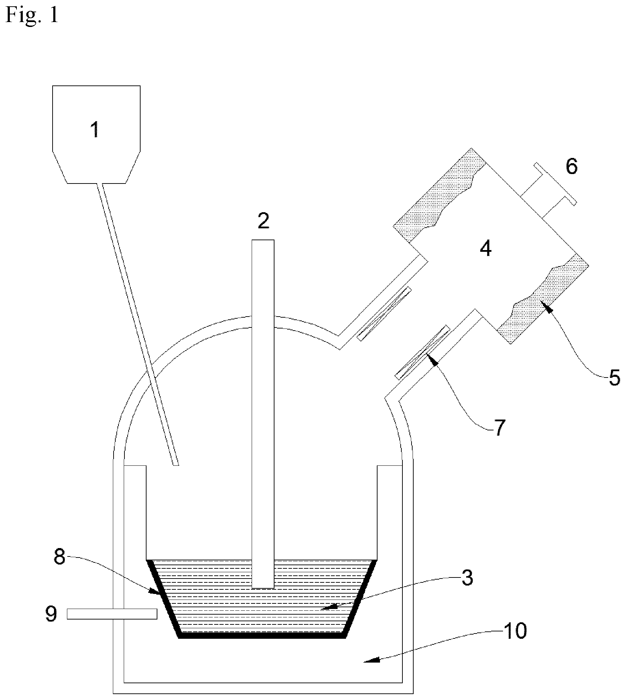

Fig. 1 shows an apparatus for silicon monoxide production. In the following the method of the present invention is

illustrated by reference to the different components of the apparatus of Fig. 1.

Raw Material Hopper (1): The process begins with the introduction of raw materials into the furnace via a hopper (1). This raw material typically consists of silica ($SiO_2$) and at least one additive to lower the melting point. These components are melted to form a base slag.

Resistive Slag Heating System (2): In a preferred embodiment, the furnace is equipped with a resistive slag heating system, where electrical current is injected through a central electrode (2) and collected via another electrode (9) connected to the conductive crucible of the furnace, such as carbon blocks or silicon carbide (10). This configuration allows for efficient heating of the molten slag, promoting the desired chemical reactions. When the charge is solid prior to the start of the system, the electrode could behave as an electric arc furnace arcing between the tip of the electrode and the hearth (the sole) of the furnace.

Addition of charge: Solid silicon and silica are continuously added to the molten base slag and additive mixture to provide free silicon to react with the molten $SiO_2$ and produce SiOx. Silica is added to maintain the correct amount of silica in the base slag. At least one additional raw material component could be added for doping (as metal, oxide, nitride or silicate). Some examples of raw material for doping are the following ones: Al, Ca, Mg and Li metal. In some cases, it is possible to add oxides and silicates and reduce them with silicon in the molten mixture.

Self-Crucible (8): The furnace walls are lined with high thermal conductivity refractories to create a self-crucible. This self-crucible maintains the molten state of the base slag mixture, ensuring a stable environment for SiOx production.

Condenser (4): As the molten mixture reacts and vaporizes, silicon monoxide (SiOx) is formed and then condensed into a solid state. The condensed SiO collects in the condenser (4), where it can be harvested.

Condensed Material (SiOx): The solidified silicon monoxide (SiOx) (5) accumulates within the condenser for subsequent extraction and processing.

Vacuum Pump (6): The entire system operates under a vacuum environment, maintained by a vacuum pump (6). This vacuum facilitates the reaction and controls the vaporization and condensation processes essential for SiOx production.

Furnace transfer could be heated (7) to avoid condensation of SiOx before achieving the condenser.

By utilizing a silica-based slag with additives to lower the melting point, the method significantly reduces the deterioration of consumables and improves the overall efficiency and productivity of the SiOx production process. The resistive slag heating system and self-crucible configuration further enhance the stability and effectiveness of the operation, making this an advanced and cost-effective solution for silicon monoxide synthesis.

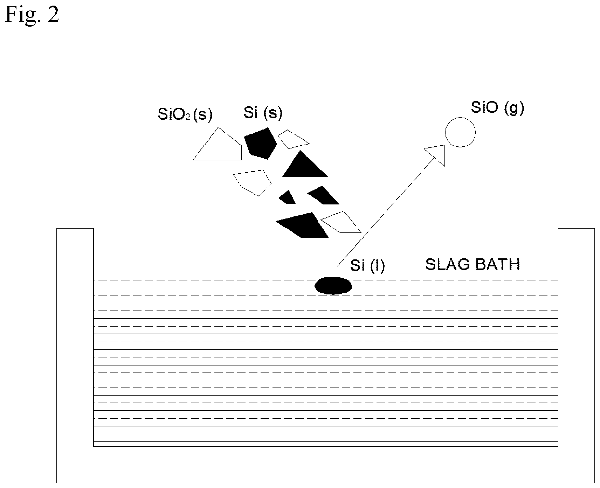

Fig. 2 illustrates the reaction scheme of the SiOx production.

The silicon is added in solid form to the molten mixture of silicon dioxide and at least one auxiliary agent. At the surface area of the molten mixture or slag the silicon melts and becomes liquid. The silicon and the silicon dioxide react with each other at this surface area to form gaseous silicon monoxide. Also, silicon dioxide is added to the molten mixture to keep the appropriate level of silicon dioxide in the slag.

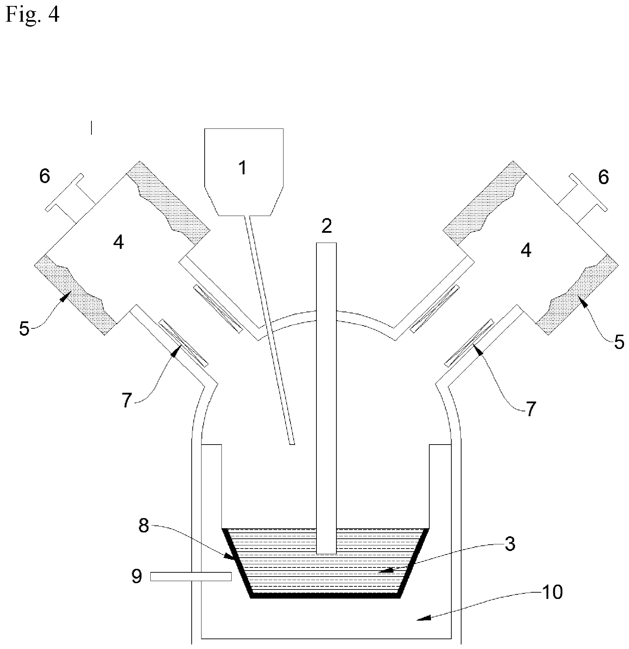

Fig. 4 shows an alternative apparatus for silicon monoxide production including a second condenser to enable continuous condensing. Otherwise, the apparatus of Fig. 4 comprises the same features as the apparatus of Fig. 1.

## EXAMPLES

The following examples further substantiate the present invention without being limiting.

### EXAMPLE 1

In this example, 85 grams of silica ($SiO_2$) and 15 grams of boron oxide ($B_2O_3$) are melted together at a temperature of 1350°C until complete melting is observed at atmospheric pressure. The resulting molten mixture is then allowed to solidify naturally. This solidified material serves as the base slag for the subsequent treatment.

### EXAMPLE 2

Using the slag prepared in example 1, for the SiOx production, 70 grams of milled quartz ($SiO_2$) with a particle size of 0.2-2 mm and ground silicon (Si) with the same particle size (0.2-2 mm) are mixed in a tumbler for 2 hours to ensure a homogeneous mixture. The mixture is then heated to a temperature of 1450°C, and a vacuum of 1000 Pa is applied for 25 minutes during this heating process. As a result, 98 grams of silicon monoxide (SiOx) are collected in the condenser.

Table 1. Weight percentage of oxygen and corresponding stoichiometry of SiOx material.

| Embodiment | O wt% | Stoichiometry SiOx |
|---|---|---|
| Example 2 | 34.1 ± 0.5 | 0.9 |

## EXAMPLE 3

In this example, a mixture of 20 grams of $SiO_2$, 15 grams of $B_2O_3$ and 5 grams of $Al_2O_3$ are mixed and melted together at 1350°C at atmospheric pressure. Once the slag preparation step is finished, the temperature inside the furnace was increased to 1500°C and the vacuum pump was started. When absolute pressure inside the chamber reached a value of 1000Pa, 100 grams of a mixture of 70 g of SiO2 and 30 g of Si, both with a particle size in the range 0.2-2mm and mixed in a tumbler for 2 hours, were added on the slag. After 45 minutes, 73 grams of solid SiO were collected in the condenser.

## EXAMPLE 4

In this example, a mixture of 84 grams of $SiO_2$, 16 grams of $Li_2O$ are mixed and melted together at 1380°C at atmospheric pressure. Once the slag preparation step is finished, the temperature inside the furnace was increased to 1400°C and the vacuum pump was started. When absolute pressure inside the chamber reached a value of 1000Pa, 100 grams of a mixture of 70g of SiO2 and 30g of Si, both with a particle size in the range 0.2-2mm and mixed in a tumbler for 2 hours, were added on the slag. After 45 minutes, 75 grams of solid SiO were collected in the condenser. The collected SiO was analyzed by ICP-OES method, obtaining the following composition (ppmw):

| Al | Ca | Fe | Ti | P | Cu | Cr | K | V | Ni | Na | Li |
|---|---|---|---|---|---|---|---|---|---|---|---|
| 583 | 67 | 252 | 5 | 0 | 5 | 21 | 195 | 1 | 8 | 30 | 16500 |

The obtained SiO was doped with 1.65% of lithium.

## EXAMPLE 5

In this example, a mixture of 70 grams of $SiO_2$, 10 grams of $Al_2O_3$ and 20 grams of CaO are mixed and melted together at 1420°C at atmospheric pressure. Once the slag preparation step is finished, the temperature inside the furnace was increased to 1500°C and the vacuum pump was started. When absolute pressure inside the chamber reached a value of 1000 Pa, 100 grams of a mixture of 70g $SiO_2$ and 30g Si, both with a particle size in the range 0.2-2mm and mixed in a tumbler for 2 hours, were added on the slag. After 30 minutes, 86 grams of solid SiO. The collected SiO was analyzed by ICP-OES method, obtaining the following composition (ppmw):

| Al | Ca | Fe | Ti | P | Cu | Cr | K | V | Ni | Na |
|---|---|---|---|---|---|---|---|---|---|---|
| 472 | 844 | 71 | 29 | 0 | 16 | 6 | 422 | 1 | 4 | 518 |

## EXAMPLE 6

In this example, 10 kg of a mixture composed of 80% $SiO_2$, 10% CaO, and 10% $Al_2O_3$ were melted together at atmospheric pressure in a crucible with a diameter of 390 mm. Heating was achieved using a central electrode with a diameter of 30 mm, to which a maximum voltage of 75 V was applied, dissipating a maximum power of 55 kW, gradually increasing the temperature from ambient to 1450°C. Once the slag preparation step was completed, 4 kg of a mixture containing 2.8 kg of $SiO_2$ in the form of silica and 1.2 kg of silicon, both with a particle size distribution of 0.2-2 mm, were added on top of the molten slag. A vacuum pressure below 10,000 Pa was applied, and the reaction proceeded for 25 minutes, during which the material was completely evaporated. During this phase, the maximum power supplied to the system was 55 kW. A total of 3.9 kg of material was obtained, which, considering the geometric conditions of the system (effective crucible-electrode surface of 0.1188 $m^2$), corresponds to a production rate of 1.31 kg/min/$m^2$. The obtained material was analyzed using the ICP-OES method, yielding the following composition (ppmw):

| Al | Ca | Fe | Ti | P | B | Cu | Cr | K | V | Ni | Na |
|---|---|---|---|---|---|---|---|---|---|---|---|
| 244 | 22,8 | 40,4 | 0,7 | 42,1 | 2 | 2,1 | 0,5 | 180,6 | 7,9 | 0,7 | 316,1 |

**X-Ray diffraction (XRD) analysis**

Powder XRD analysis of the SiO embodiments were performed using diffractometer with CuK$\alpha$ radiation over the range of 10-80° 2$\theta$, step size of 0.02° and scan rate of 5 s/step.

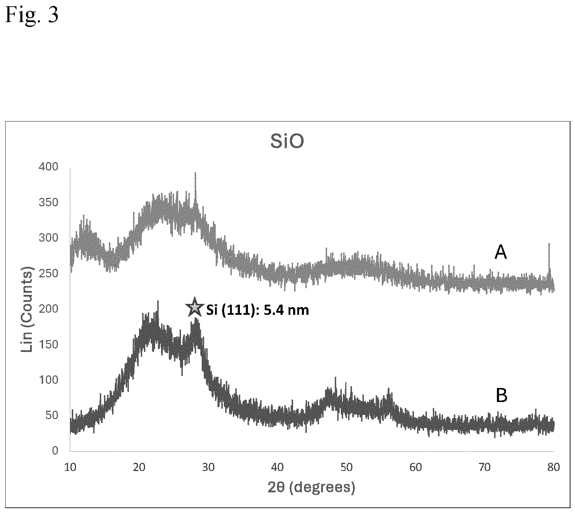

The diffractograms of the representative SiO embodiments produced using the apparatus described in this disclosure are shown in Figure 3. The embodiment A in the figure 3 prepared according to the method described in the example 3, exhibits completely amorphous character with no visible diffraction peaks that could correspond to crystalline domains of silicon or any other crystalline structure. In some embodiments, as shown in diffractogram B on Figure 3 (example 5), disproportionation during the condensation process resulted in the presence of small crystalline silicon particles with a characteristic peak at 28°. A mean crystallite size of $d_{cryst}$ = 5.4 nm was estimated using the Scherrer formula.

**Inert gas fusion**

Elemental determination of oxygen was performed based on inert gas fusion technique followed by measurement with infrared (IR) detector.

A pre-weighed sample was heated in a high-purity graphite crucible to extremely high temperatures (around 2200 - 2300 °C) in an inert gas flow (helium). Oxygen was reduced by carbon coming from the crucible to form carbon monoxide (CO) which was then converted to carbon dioxide ($CO_2$). Finally, CO and $CO_2$ concentrations were measured by infrared cells.

**Claims**

1. A method for producing silicon monoxide (SiOx) comprising the following steps:

   (a) melting a mixture of silicon dioxide ($SiO_2$) and at least one auxiliary agent at a temperature above the melting temperature of the mixture to form a molten mixture of the silicon dioxide ($SiO_2$) and the at least one auxiliary agent;
   (b) adding silicon and silicon dioxide ($SiO_2$) to the molten mixture;
   (c) reacting the silicon dioxide ($SiO_2$) with the silicon (Si) at a pressure of less than 10,000 Pa, preferably less than 5,000 Pa o form gaseous silicon monoxide (SiOx);
   (d) condensing and/or solidifying the gaseous silicon monoxide (SiOx); and
   (e) obtaining liquid and/or solid silicon monoxide;

   wherein x = 0.8 to 1.2.

2. The method according to claim 1, wherein the at least one auxiliary agent is selected from the group consisting of aluminium oxide (preferably aluminium trioxide, $Al_2O_3$), zirconium oxide ($ZrO_2$), boron oxide (preferably boron trioxide, $B_2O_3$), titanium oxide (preferably titanium dioxide$TiO_2$), iron oxide (preferably iron(II) oxide, FeO), rare-earth oxides (yttrium oxide $Y_2O_3$, cerium oxide $CeO_2$, hafnium oxide $HfO_2$, among others rare earth oxides), alkaline earth oxides (strontium oxide SrO, calcium oxide CaO, magnesium oxide MgO, barium oxide BaO, beryllium oxide BeO) and others.

3. The method according to any one of the preceding claims, wherein the silicon dioxide ($SiO_2$) and the silicon (Si) is added in a molar ratio of approx. 1: 1 ($SiO_2$ : Si) in step (b).

4. The method according to any one of the preceding claims, wherein the mixture of the silicon dioxide ($SiO_2$) and the at least one auxiliary agent has a higher density than silicon (Si).

5. The method according to any one of the preceding claims, wherein at least one additional raw material component is added to the molten mixture, wherein the at least one additional raw material component is one or more doping material, preferably present as metal, or in form of its oxide, nitride or silicate, wherein the at least one additional raw

material component is preferably selected from the group consisting of Mg, Li, Ca, Na and Al.

**6.** The method according to any one of the preceding claims, wherein the reaction of step (c) takes place at a temperature of 1200°C to 1800°C, preferably 1400°C to 1700°C and/or the melting temperature of the mixture of the silicon dioxide ($SiO_2$) and the at least one auxiliary agent is 1200°C to 1800°C, preferably 1400°C to 1700°C.

**7.** The method according to any one of the preceding claims, wherein the method is performed in an electric furnace, preferably the electric furnace comprises (i) a conductive crucible containing the mixture of the silicon dioxide ($SiO_2$) and the at least one auxiliary agent and (ii) a heating system comprising a first electrode and a second electrode, wherein the first electrode is in contact with the mixture and the second electrode is connected to the conductive crucible.

**8.** The method according to claim 7, wherein the conductive crucible is made of carbon and/or silicon carbide.

**9.** The method according to any one of claims 7 or 8, wherein the furnace further comprises a refractory lining and a cooling system, wherein the refractory lining and/or the cooling system is preferably made of a material with high thermal conductivity, wherein the material with high thermal conductivity is preferably selected from the group consisting of carbon and silicon carbide.

**10.** The method according to claim 9, wherein the refractory lining is cooled to and/or maintained at a temperature below the melting temperature of the mixture of the silicon dioxide ($SiO_2$) and the at least one auxiliary agent, preferably to form and/or maintain a protective layer of the mixture on the refractory lining.

**11.** An apparatus for producing silicon monoxide (SiOx), preferably according to claims 1 to 10, comprising the following:

(1) a feeder for feeding silicon dioxide ($SiO_2$), silicon (Si) and optionally at least one additional raw material component;
(2) a heating system for heating the mixture of the silicon dioxide ($SiO_2$) and the at least one auxiliary agent to a temperature being above the melting temperature of the mixture;
(3) a crucible for reacting the silicon dioxide ($SiO_2$) with the silicon (Si) to form gaseous silicon monoxide (SiOx);
(4) a vacuum generating device for reducing to and/or maintaining the pressure at less than 10,000 Pa, preferably less than 5,000 Pa; and
(5) a condenser for solidifying gaseous silicon monoxide (SiOx);

wherein x = 0.8 to 1.2.

**12.** The apparatus according to claim 11, wherein the heating system comprising a first electrode and a second electrode, wherein the first electrode is in contact with the mixture and the second electrode is connected to the conductive crucible.

**13.** The apparatus according to claims 11 or 12, which comprises a refractory lining and a cooling system, wherein the refractory lining and/or the cooling system is preferably made of a material with high thermal conductivity, wherein the material with high thermal conductivity is preferably selected from the group consisting of carbon and silicon carbide.

**14.** The apparatus according to any one of claims 11 to 13, wherein (i) the refractory lining can be cooled to and/or maintained at a temperature below the melting temperature of the mixture, preferably to form and/or maintain a protective layer of the mixture on the refractory lining.

**15.** The apparatus according to any one of claims 11 to 14, which comprises (i) a conduit between the reactor and the condenser, wherein the conduit is heated to prevent blockage caused by the deposition of SiOx in the conduit during continuous use and/or (ii) a second condenser arranged such that the system can be operated continuously by alternately blocking one condenser for cooling and removal of material while continuing to condense material in the second condenser.

Fig. 1

1
2
3
4
5
6
7
8
9
10

Fig. 2

$SiO_2$ (s)
Si (s)
SiO (g)
Si (l)
SLAG BATH

Fig. 3

SiO
Lin (Counts)
400
350
300
250
200
150
100
50
0
10
20
30
40
50
60
70
80
2θ (degrees)
A
B
Si (111): 5.4 nm

Fig. 4

1
2
6
6
4
4
5
5
7
7
8
3
9
10

Europäisches
Patentamt
European
Patent Office
Office européen
des brevets

# EUROPEAN SEARCH REPORT

Application Number
EP 25 15 7532

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/259052 A1 (LEE JAE WOO [KR] ET AL) 18 August 2022 (2022-08-18) * paragraph [0041] - paragraph [0070]; claims 1-18; figures 2, 3; examples 1-8 * | 1-15 | INV. C01B33/18 C01B33/113 |
| X | JP S63 103815 A (KAWASAKI STEEL CO) 9 May 1988 (1988-05-09) | 1-10 | |
| A | * page 75, left-hand column, paragraph 1 - page 79, left-hand column, paragraph 15; claim 1; figure 1 * | 11-15 | |
| X | US 9 012 082 B2 (SAMSUNG SDI CO LTD [KR]) 21 April 2015 (2015-04-21) * claims 1-18; examples 1, 2 * | 1-10 | |
| X | JP 4 465206 B2 (NIPPON STEEL CORP) 19 May 2010 (2010-05-19) * paragraph [0019] - paragraph [0030]; claims 1-12; examples 1, 2 * | 1-15 | |
| A | EP 1 169 095 B1 (CLEAN TECHNOLOGIES INT CORP [US]) 9 July 2008 (2008-07-09) * paragraph [0015]; claims 1-17 * | 11-15 | TECHNICAL FIELDS SEARCHED (IPC): C01B |

The present search report has been drawn up for all claims

1

| Place of search | Date of completion of the search | Examiner |
|---|---|---|
| The Hague | 15 July 2025 | Sevillano Rodriguez |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 15 7532

This annex lists the patent family members relating to the patent documents cited in the above-mentioned European search report. The members are as contained in the European Patent Office EDP file on
The European Patent Office is in no way liable for these particulars which are merely given for the purpose of information.

15-07-2025

| Patent document cited in search report | Publication date | Patent family member(s) | Publication date |
|---|---|---|---|
| US 2022259052 A1 | 18-08-2022 | NONE | |
| JP S63103815 A | 09-05-1988 | NONE | |
| US 9012082 B2 | 21-04-2015 | CN 1667855 A | 14-09-2005 |
| | | JP 4401984 B2 | 20-01-2010 |
| | | JP 2005259697 A | 22-09-2005 |
| | | US 2005233213 A1 | 20-10-2005 |
| | | US 2014234535 A1 | 21-08-2014 |
| JP 4465206 B2 | 19-05-2010 | JP 4465206 B2 | 19-05-2010 |
| | | JP 2005231957 A | 02-09-2005 |
| EP 1169095 B1 | 09-07-2008 | AU 4020400 A | 09-10-2000 |
| | | EP 1169095 A1 | 09-01-2002 |
| | | US 6195382 B1 | 27-02-2001 |
| | | WO 0056407 A1 | 28-09-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP S63103815 A
- US 20210135222 A1